# EUROPEAN PATENT SPECIFICATION

(11) **EP 2 388 903 B1**
(45) Date of publication and mention of the grant of the patent: **04.07.2018**
(21) Application number: 11166746.5
(22) Date of filing: 19.05.2011
(51) Int. Cl.: H02M 3/337, H02M 1/36, H02M 1/40

(54) **DC-DC converter apparatus with in-rush current limitation circuit and corresponding DC-DC conversion method**
Gleichspannungswandlervorrichtung mit Einschaltstrombegrenzung und entsprechendes Gleichstromwandlungsverfahren
Appareil de convertisseur CC-CC avec circuit de limitation de courant d'appel et procédé de conversion CC-CC correspondant

(30) Priority: 19.05.2010 IT TO20100417
(43) Date of publication of application: 23.11.2011
(73) Proprietor: Magneti Marelli S.p.A., 20011 Corbetta (MI) (IT)
(72) Inventor: Fantino, Davide, 10078 Venaria Reale (Torino) (IT); Nepote, Andrea, 10078, Venaria Reale (Torino) (IT); Cabodi, Gianpiero, 10129, Torino (IT)
(74) Representative: Notaro, Giancarlo

(56) References cited:
- EP-A1- 0 567 108
- DE-A1- 2 633 876
- US-A- 3 388 311
- US-A- 3 432 737
- US-B1- 6 452 815
- DEISCH CECIL ED - INSTITUTE OF ELECTRICAL AND ELECTRONICS ENGINEERS: "Simple switching control method changes power converter into a current source", PROCEEDINGS OF THE ANNUAL POWER ELECTRONICS SPECIALISTS CONFERENCE. (PESC). BLACKSBURG, JUNE 22 - 26, 1987; [PROCEEDINGS OF THE ANNUAL POWER ELECTRONICS SPECIALISTS CONFERENCE. (PESC)], NEW YORK, IEEE, US, 13 June 1978 (1978-06-13), pages 300-306, XP032758473, ISSN: 0275-9306, DOI: 10.1109/PESC.1978.7072368 ISBN: 978-99963-23-27-0 [retrieved on 2015-03-27]

## Description

The present invention regards an insulated DC-DC boost switching converter apparatus comprising a transformer in turn comprising a primary winding and a secondary winding with central tap, a reactive circuit connected in series between said central tap and node to which a continuous input voltage to convert is applied, in particular a battery voltage, a switching network comprising main switches to selectively connect respective half-windings of said second winding to a fixed voltage reference, in particular a ground reference, under the control of respective switch driving signals, a circuit to limit an in-rush current in said reactive circuit. Such converters are e.g. known from documents US 3,432,737, US 3,388,311 and DE 2633876 A1.

A DC-DC converter is a circuit that converts a continuous current source from one voltage level to another. Such converters constitute a class of power converters. DC-DC converters are important in mobile electronic instruments such as cellular telephones and laptop computer, which are supplied by batteries. Often such electronic instruments contain various subcircuits, in which each requires a voltage different from that supplied by the battery (typically higher or lower than that of the battery, and at times also negative voltages). In addition, the battery voltage decreases as the power is consumed. DC-DC converters offer a means of generating different voltages controlled from a variable voltage battery, in that way saving space and avoiding the use of multiple batteries to provide energy to the various parts of the instrument.

Furthermore, in the automotive sector, for example for electric automobiles, it is often necessary that such converters be bidirectional, converting between a high voltage side and a low voltage side in both directions. For example, two electrical networks are present in hybrid vehicles, a traditional electrical network for functions such as lights or the controller for the internal combustion engine and a high voltage electrical network for the electric motor, that may operate for example at about 600 V. In this context energy conversion systems are necessary to connect the two electrical networks using a converter, preferably bidirectional, in particular to transfer energy from the high voltage network supplied by a specific battery, for example lithium ion, to the lower voltage conventional network.

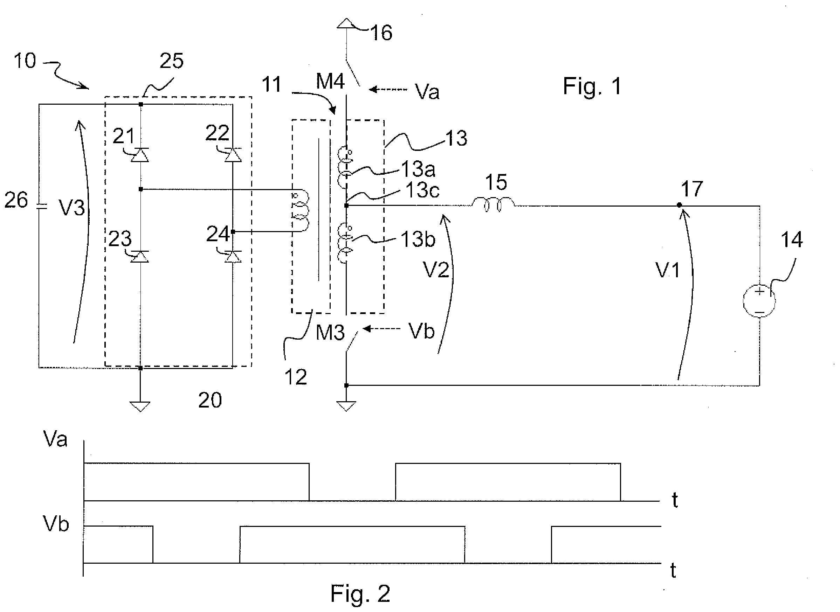

In this regard, in Figure 1 a bidirectional switching converter circuit according to the known art is indicated in its entirety with 10.

In particular, in Figure 1 reference 11 indicates a transformer with a turn ratio k greater than one between the primary and secondary windings. Therefore, such transformer 11 comprises a primary winding, indicated with 12, while the secondary winding is indicted with 13. Although the winding of a transformer that receives energy is conventionally defined as primary and the one from which energy is withdrawn is defined as the secondary, for the purpose of the present description, which concerns mostly, though not exclusively bidirectional converters, the primary winding will be defined as the first one from the side of the circuit with the highest voltage and the secondary winding the second one from the side of the circuit with the lowest voltage, having therefore a lower number of turns than the first or primary winding.

In particular, in Figure 1 such circuit is already represented in the boost configuration, in which a voltage is applied to the secondary, from the low voltage side, and such voltage is recovered on the primary, multiplied by the turn ratio k.

The secondary winding 13 is the double wound type with a central tap, that is, two half-windings 13a and 13b departing from a central tap 13c. Reference 14 indicates a continuous voltage generator, in particular a battery, that applies an input voltage for the conversion boost, which is returned through an energy-storing reactive circuit, obtained here by means of a series inductor 15, to the central tap 13c of the secondary winding 13 of the transformer 11. The two half-windings 13a and 13b of the secondary winding 13 that depart from the central tap 13a are connected to a ground reference 16 by means of a respective first main switch M4 and a second main switch M3, that identify a switching network. Such first main switch M4 and second main switch M3 can be obtained by means of transistors, in particular, MOSFETs commanded by a control module, not shown in Figure 1, that sends respective driving signals, Va and Vb, in particular voltages at the control electrodes, for example the gate of the MOSFETs; to provoke opening and closing. Therefore, the converter apparatus 10 functions as a DC-DC boost insulated switching converter apparatus, with push-pull type operation of the switches. Downstream of the secondary winding 13 a diode bridge rectifier 20 is connected, comprising in particular two respective diodes 21 and 22 the anodes of which are connected to the positive and negative clamps, respectively, of the primary winding 12, while their cathodes are connected to an output node 25. The other two branches of the bridge 28 are constituted by further diodes 23 and 24, the cathodes of which are connected to the positive and negative clamps, respectively, of the primary winding 12, while their anodes are connected to the reference ground 16. When the converter in Figure 1 is bidirectional, such output node 25 is the input node whenever the conversion is made from the high voltage side towards the low voltage side, also known as buck or step-down conversion, collecting the voltage divided by the turn ratio k downstream of the secondary winding, to the node 17. Regarding this, it can be seen that to obtain bidirectional operation of the circuit, the diodes 21, 22, 23, 24 are actually transistors, for example MOSFETs, that, for the conversion of high to low voltage, are commanded to perform a step-down switching conversion. However, since the purpose of the present description primarily concerns assessing the behaviour of converters commanded as boost converters, such transistors are equivalent to diodes and are represented as such for simplicity.

Between the output node 25 and the reference ground 16 an exit capacitor 16 is shown that is used, for example to filter the ripple, on which a voltage drop occurs indicated with V3, which corresponds to the output of converted voltage from the apparatus.

The difficulties, with a converter apparatus like the one shown in Figure 1 occur particularly on power up, when the voltages at the nodes have not yet reached normal values.

Initially, on powering up the apparatus 10, the voltage V3 is zero at the capacitor 26 at the primary winding side 12, therefore, when one of the two main switches, M4 or M3, is closed there is a violent surge in current through the induction series 15 that may reach levels destructive to the circuit, since the voltage V2 at the secondary winding 13 is less that the voltage V1 at the generator, that is, the voltage at the primary winding 12 is lower than the voltage at the secondary winding 13 multiplied by the turn ratio k of the transformer 11. Such current generated when the converter is powered on is generally known as in-rush current or starting current. The condition lasts as long as the voltage at the capacitor 26 on the primary side has not reached the value envisioned by the turn ratio k of the transformer 11. Also opening each main switch M4 and M3 in succession causes destructive effects because the current passes through the inductor 15 and the energy that accumulates therein cannot instantly become nil without destroying some component of the circuit.

Figure 2 is a time diagram showing the driving signals Va and Vb at the main switches M4 and M3 for the converter apparatus 10. In the diagram, which shows the signals as a function of time t, a high level corresponds to the closed state of the switch, a low level to the open state.

Figure 3 shows a know DC-DC boost converter apparatus, with a flyback-type structure, indicated with reference 30, that comprises as circuit to limit the in-rush current.

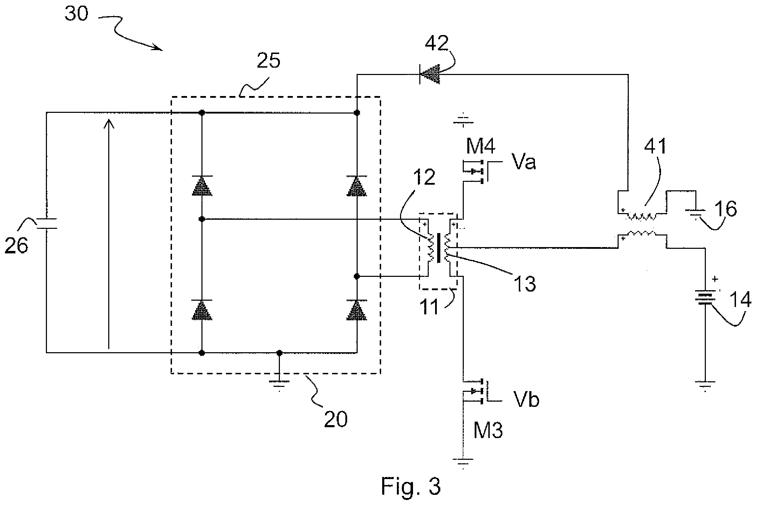

Compared to apparatus 10, such apparatus 30 comprises a reactive circuit to store the energy in which the inductor series is obtained by means of one of the windings of a transformer 41, the other winding of which discharges the energy previously accumulated in the nucleus across a diode 42 in direct conduction. In Figure 3 the main switches M4 and M3 of the switching network are described as MOSFET transistors controlled by respective driving signals Va and Vb at their control electrodes. Such apparatus 30 envisions driving that differs with respect to the apparatus 10, in that it requires that the main switches M4 and M3 be closed one at a time, alternately.

A convertor apparatus like that shown in Figure 3 has disadvantages of dimensions and cost, due to the need for coupling the transformers with the inductor series. In addition, the converter apparatus functioning with boost must be insulated. This requires insulating also the additional windings for coupling to the inductor series. Finally, a specific switch-driving strategy must be adopted.

The present invention has the aim of providing a DC-DC converter apparatus solution that resolves the disadvantages of the known art, and, in particular, permits efficacious limitation of the in-rush current on powering up an insulated boost converter, when in particular the voltage at the primary is lower than that at the secondary multiplied by the turn ratio, at a more economical cost and with a smaller circuit with respect to the known solutions.

According to the present invention, such aim is achieved by means of a conversion method according to claim 1 and a converter apparatus according to claim 4. The invention will be described with reference to the annexed drawings, provided by way of non-limiting example only, in which:
Figure 1, Figure 2 and Figure 3 have already been explained above;

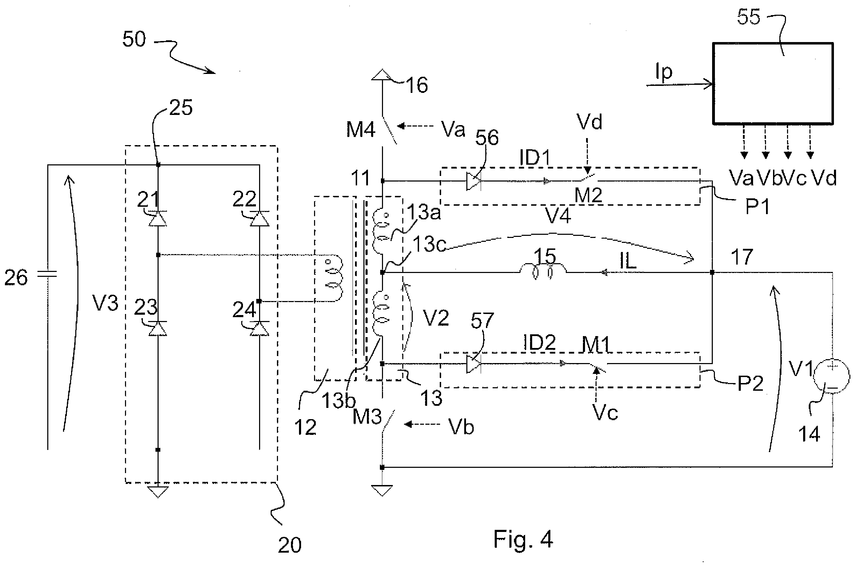

Figure 4 is a schematic circuit diagram of one embodiment according to the invention;

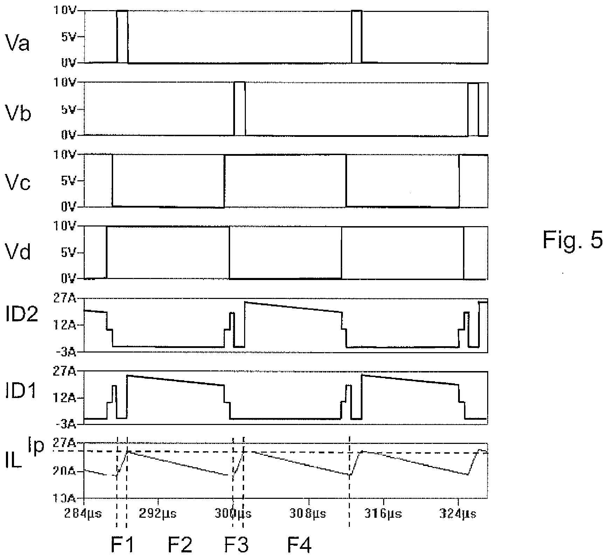

Figure 5 shows a time diagram of driving signals used by the converter apparatus in Figure 4 in one application;

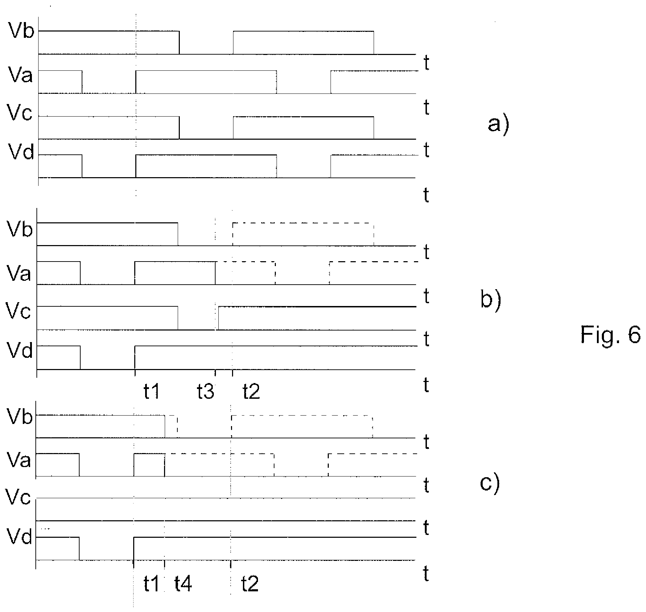

Figures 6a, 6b, 6c show time diagrams of the driving signals used by the converter apparatus in Figure 4 in other applications.

Briefly, the proposed converter apparatus comprises two circuit branches, in particular each comprising a respective additional switch with respect to the main switches of DC-DC converter switching network, as well as a respective diode. During power on, such circuit branches allow the current flowing through the energy storing reactive circuit to find a closed path in the moment in which the main switches of the switching network are opened.

Figure 4 is a schematic circuit diagram of an embodiment of an insulated DC-DC converter apparatus according to the invention. In that diagram components with analogous functions to those shown in Figures 1 and 2 are indicated with the same references.

In particular, such converter apparatus, indicated in its entirety with the reference 50 comprises the continuous voltage generator 14, for example a battery, which applies a voltage V1, returned through an energy-storing reactive circuit, also in this case represented by an inductor series 15, to the secondary winding 13 of the transformer 11. The part of the circuit downstream of the transformer 11 corresponds to that of the converter apparatus in Figure 1 and for that reason will not be described in detail herein.

According to a principal aspect of the invention, each of the half-windings 13a and 13b that depart from the central tap 13a of the secondary 13 has its other end both:
- selectively connected to the ground reference 16, through the respective main switch M4 or M3, and
- selectively connected by means of a circuit branch P1 or P2, selectable by a respective additional switch M2 or M1, to the input node 17 to which the input voltage V1 is applied, causing, when the respective additional switch is closed, a closed path from the secondary 13 towards such input node 17 through which a current can flow, in particular the current that runs through the inductor 15.

The first circuit branch P1 starting from the half-winding 13a comprises a diode 56 that directly conducts a current ID1 that runs toward the input node 17, followed in series by a first additional switch M2 that is connected at the other end to the input node 17. In the same way, the second circuit branch P2 starting from the half-winding 14a comprises a diode 57 that directly conducts a current ID1 that runs toward the input node 17, followed in series by a second additional switch M1 that is connected at the other end to the input node 17.

As is evident, the two paths P1 and P2 are dual, since they operate in relation to the two branches of the push-pull architecture, already examined with reference to Figure 1, which is substantially replicated here, with the notable exception of circuit paths P1 and P2.

In the embodiment in Figure 4 the input voltage V1 is 12V.

The main switches M4, M3 and the additional switches M2, M1 are preferably made with transistors, in particular MOSFETs, with their open and closed states controlled at the respective control electrode by respective driving signals Va and Vb for the switches M4 and M3 and by respective additional command signals, Vc and Vd, for the additional switches M1 and M2, respectively. The diagram in Figure 5 shows such command signals Va, Vb, Vc, Vd, as a function of time, and therefore the consequent state of closure and opening of the corresponding commanded switches. In addition, Figure 5 shows the corresponding trends of the currents ID1 and ID2 in the diodes 56 and 57, that is in each branch P1, P2, as well as the trend of the current IL in the inductor 15.

In a first phase F1 the driving signal Va of the first main switch M4 and the driving signal Vd of the first additional switch M2, that in the embodiment described are of voltages that vary between 0 and 10 V, are brought to the high level, closing the switches, which remain closed until the current IL in the inductor reaches a predetermined current limit value Ip. Alternatively, the switches remain closed for a predetermined time, in particular a time estimated to be adequate for reaching said current limit value. Therefore, either direct detection of the current, for example by means of a comparator, or estimation of the current in function of time, for example based on the inductance and voltage applied is foreseen. At this point, in a second phase F2, the driving signal Va commanding the first main switch M4 is brought to a low level, opening it, so that the current of the secondary 13 returns to the inductor 15 through the first additional switch M2 that is electrically connected to the half-winding 13a, in particular through diode 56. This is evidenced by the sharp rise in the current ID1 at the beginning of phase F2 in Figure 5. In both phases F1 and F2 energy is transferred to the primary 12 through the transformer 11. In the first phase F1 the voltage V4 at the inductor 15 is positive, in that the input voltage V1 is the voltage of the battery and V2 is a lower voltage, being the voltage V3 divided by the turn ratio k. The current IL in the inductor 15 has a positive slope, that is, its value increases. In the second phase the voltage V4 at the inductor 15 changes direction, assuming a negative value -V2 and the current IL in the inductor 15 has a negative slope, that is, it decreases. Therefore, in this way the value of the current IL in the inductor 15 can be controlled, avoiding that it reach values destructive for the circuit.

During phases F1 and F2 the switches M3 and M1 remain open, while the upper branch of the converter apparatus and therefore the first path P1 operates. Vice versa, in a third phase F3 and fourth phase F4, the main switches M4 and M2 of the branch P1 remain open, while the same opening and closing sequence applied in phases F1 and F2 are applied now to the second main switch M3 and the second additional switch M1, to make the lower branch of the converter apparatus and therefore the second branch P1 operational, guaranteeing voltage symmetry on transformer 11.

In Figure 4 also show schematically a corresponding controller module 55 that sends the driving signals Va, Vb, Vc, Vd and receives the predetermined Ip current limit value from a measuring circuit, not shown. Such current value, as said, may not be received, but rather estimate in the controller, for example estimating the value of the current over time. The signals in Figure 5 are applied to overcome a transient condition when powering on the converter apparatus that is linked, as was said, to the fact that the voltage at the primary is initially lower than the voltage at the secondary divided by the turn ratio, while after the capacitor 26 is charged it is possible to use normal driving mode, analogous for the main switches to that shown with reference to Figure 2, which will be described in more detail with reference to the diagram in Figure 6a.

The circuit in Figure 4 can be used advantageously also to avoid saturation problems that arise during normal operation of the apparatus, that is, after the capacitor 26 is charged. In the apparatus in Figure 1, when fully operational, the transformer can reach or approach saturation, where the voltage V2 equals zero.

In Figure 6a and particularly in Figures 6b and 6c time diagrams of the control signals Va, Vb, Vc, Vd are shown that can be applied to the main switches M4 and M3 and additional switches M2 and M1 to overcome such disadvantage.

In general, as was said previously, the driving signals Va and Vb of the main switches M4 and M3 follow a normal opening and closing sequence when fully operational, as shown in Figure 1, to allow normal functioning of the converter. In the case of normal driving, without the need to activate protection against transformer saturation, the driving envisions substantially alternating the open and closed states of the main switches M4 and M3, as shown in Figure 6a. The additional switches M2 and M1 are commanded, but cannot themselves circulate current, because the diodes 56 and 57 of the branches P1 and P2 are reverse biased. However, the current limiting circuit is ready to intervene under conditions of saturation.

Figure 6b represents such condition of saturation, that is, when transformer saturation is detected or when such a condition is approaches during normal driving. The instant in which the additional switch M2 is closed during normal driving is indicated with t1, while the instant in which the additional switch M1 is closed is indicated with t2. At a time t3, comprised between times t1 and t2, corresponding to the occurrence of a state of saturation, the voltage Va at the main transistor M4 is lowered, thereby opening it and avoiding uncontrollable current jumps. The current stored in the inductor series 15 can pass through the switch M2, which is closed. Consequently, immediately after time t3, a high level driving signal Vd is sent to the additional switch M1 to close it and divide the current between the two branches P1 and P2, lessening the load on the additional switch M2. The additional switches M2 and M1 are held closed until the current drops below a safety threshold value. The energy stored in the inductor is dissipated on the switches and diodes of the additional branches. At this point, it is possible to recommence the command cycles of normal operation driving in Figure 6a. The broken line in Figure 6b indicates the normal communications that are suppressed in case of saturation.

The occurrence of a saturation condition is exemplified in Figure 6b, or approaching such condition, when the main switch M4 is closed and the main switch M3 is open.

Instead, Figure 6c shows the case in which the saturation occurs at a time t4 in which both the main switch M4 and the main switch M3 are closed. To avoid that the current jump uncontrollably the main switches M4 and M3 are opened. The current stored in the inductor 15 can however pass through the additional switches M2 and M1, which are closed. The additional switches M2 and M1 are held closed until the current drops below a safety threshold value. At this point, it is possible to recommence the normal function command cycles.

Therefore, the control strategies demonstrated with reference to Figures 6b and 6c provide in general, in the case of saturation, opening or holding open the first main switch M4 and the second main switch M3, and closing or holding closed the corresponding additional switches M2 and M1, so to allow the inductor 15 to discharge slowly through the corresponding circuit branches P1 and P2, until a safe current level is reached, avoiding saturation of the transformer 11.

The converter apparatus in Figure 4, was described so far only in the conversion from a lower voltage to a higher voltage, that is, from the side that performs the boost conversion, but, as was said, the high voltage side can be configured to operate bidirectionally, performing in an alternative driving mode of step-down conversion. The diode bridge 20, as was said, in this case can correspond to a transistor switching bride, for example MOSFETs, each of which is left open when functioning as the boost converter illustrated in Figures 4, 5 and 6a, 6b, 6c, so that each switch functions as a diode, in particular the body diode function of the transistor, for example MOSFETs, operate analogously to the diodes 21, 22, 23, 24 in Figure 4. To convert from high voltage to low voltage, in the other direction, therefore applying an input voltage to node 25, across the capacitor 26, which therefore operates as a filter, the transistor bridge, for example MOSFET, is commanded by means of respective control signals to rectify the voltage at the secondary.

Therefore, the proposed solution advantageously resolves the in-rush current problem on powering up an insulated boost converter, when the voltage at the primary is less than that of the secondary multiplied by the turn ratio, providing a closed path for the current running through the reactive storage circuit to follow at the moment of opening the main switches of the switching network. The proposed converter apparatus advantageously resolves such disadvantages, both in the case of monodirectional boost converters, and in the case of bidirectional converters.

Moreover, with respect to known converters that limit the current through coupling transformers, the proposed converter apparatus has less bulky components.

In addition, the proposed converter apparatus avoids transformer saturation during normal operation by driving the additional switches with appropriate signals.

Naturally, without prejudice to principle of the finding, the details of construction and the embodiments may vary, even appreciably, with reference to what has been described and illustrated by way of example only, without departing from the scope of the invention as defined by the appended claims. The control module can be single or correspond for example to a plurality of control modules that separately control, for example, the switching network and the additional branches, as well as separately controlling the switching network from the primary side, where operating in bidirectional mode.

The converter boost apparatus as described and claimed can be used also in monodirectional mode and in that case the details of the circuit from the high voltage side may also differ from those illustrated herein.

The proposed converter apparatus can also be used in various fields where DC-DC conversion is required, for example in the field of portable electronic instruments such as cellular telephones and laptop computers. The proposed converter apparatus finds particularly preferred applications in the automotive sector, for example, in the previously cited electric or hybrid vehicles with thermal and electric propulsion, that comprise respectively two electrical networks, one traditional electrical network, for example to functions such as lights or the control unit for internal combustion engines and a high voltage network for an electric motor.

## Claims

1. Method for DC-DC boost insulated switching conversion including
- operating the conversion through a transformer (11) which includes a first winding (12) and a second winding (13) with a lower number of turns than the first winding (12) and a central tap (13c) in the second winding (13) separating it into first and second half-windings (13a, 13b) between the central tap and first and second outer terminals
- applying a continuous input voltage to convert (V1) to a node (17) and from there to said central tap (13c) of said second winding (13) through an energy storage reactive circuit (15), in particular an inductor,
- performing a switching by first and second main switches (M3, M4) to selectively connect said first or second outer terminals of said first or second half-windings (13a, 13b) to a fixed voltage reference (16)
- performing a limitation (P1, P2) of an in-rush current in said reactive circuit (15) at power-on,
said operation of limitation of an in-rush current (P1, P2) in said reactive circuit (15) includes selectively connecting during said power-on phase each of said first or second outer terminals of said first or second half-windings (13a, 13b) to said node (17) by means of respective first or second circuit branches (P1, P2), said branches each including at least a series diode (56, 57) that conducts current towards said node (17) and an additional controlled transistor switch (M2, M1) under the control of an additional driving signal (Vc, Vd) driving, in the context of a power-on mode, said switches according to the following phases:
- in a first phase (Fl) closing said first main switch (M4) and said first additional switch (M2), keeping them closed until a current (IL) in the reactive storage circuit (15) reaches a limit current value (Ip), which is in particular measured or estimated, keeping open said second main switch (M3) and said second additional switch (Ml);
- in a second phase (F2), opening said first main switch (M4), keeping closed said first additional switch (M2) in order to let a current flow to the input node (17);
- in a third phase (F3) closing said second main switch (M3) and said second additional switch (M1), keeping them closed until the current (IL) in the reactive storage circuit (15) reaches the limit current value (Ip) or for the time apt to reach said limit current value (Ip), keeping open said first main switch (M4) and said first additional switch (M2);
- in a fourth phase (F4), opening said second main switch (M3), keeping closed said second additional switch (M1) in order to let a current flow to the input node (17).
**characterized in that** when, during a normal driving mode, a saturation condition of the transformer (11) is detected, opening or holding open the first main switch (M4) and the second main switch (M3) and close or keep closed both additional switches (M2, M1), in order to let the reactive circuit (15) discharge through both circuit branches (P1, P2) till reaching a current safety value.

2. Method according to claim 1 **characterized by** operating a bidirectional conversion, using as diodes (21, 22, 23, 24) of a rectifier circuit (20) connected to said first winding (12) and providing an output voltage (V3) to an output node (25) diodes of transistors, in particular body diodes, which transistors are controlled through respective control signals to operate the switching conversion of a higher voltage applied to said output node (25) in a lower voltage rectified at the second winding (13) of the transformer.

3. Method according to one or more of the previous claims, **characterized by** operating the conversion between two electric networks, at a higher voltage and lower voltage, of an auto vehicle, in particular electric networks of a hybrid vehicle with thermal and electric propulsion.

4. DC-DC boost insulated switching converter apparatus, including a transformer (11) which includes in turn a first winding (12) and a second winding (13) with a lower number of turns than the first winding (12) and having a central tap (13c) in the second winding (13) separating it into first and second half-windings (13a, 13b) between the central tap and first and second outer terminals, an energy storage reactive circuit (15), in particular an inductor, connected in series between said central tap (13c) and a node (17) arranged to receive a continuous input voltage to be converted (V1), in particular a battery voltage, a switching network including first and second main switches (M4, M3) to selectively connect said first or second outer terminals of said first or second half-windings (13a, 13b) to a fixed voltage reference (16), in particular a ground reference, under the control of respective switching driving signals (Va, Vb), a circuit (P1, P2) arranged to limit, in use, an in-rush current in said reactive circuit (15),
said circuit (P1, P2) arranged to limit an in-rush current in said reactive circuit (15) including a first circuit branch (P1) and a second circuit branch (P2), each adapted to selectively place in electrical connection a respective outer terminal of a first half-winding (13a) or second half-winding (13b) of said second winding (13) of the transformer (11) with the node (17) to which a continuous input voltage (V1) to convert is applied, said first and second circuit branches (P1, P2) each comprising at least a series diode (56, 57) that conducts current towards said node (17) and an additional controlled transistor switch (M2, M1) under the control of respective additional driving signals (Vc, Vd),
**characterized in that** said converter is configured to implement the method of claim 1.

5. Apparatus according to claim 4, **characterized in that** said main switches (M4, M3) are transistors, in particular MOSFETs.

6. Apparatus according to one or more of the previous claims 4 to 5, **characterized in that** it further comprises a diode rectifier circuit (20), an output node (25) and an output capacitor (26), said diode rectifier circuit being arranged to connect the first winding (12) of the transformer (11) to said output node (25) on which a converted voltage (V3) is taken and to which said output capacitor is connected (26).

7. Apparatus according to claim 6, **characterized in that** it is configured to operate a bidirectional conversion, said diodes (21, 22, 23, 24) of the rectifier circuit (20) being diodes of transistors, in particular body diodes, controllable through respective control signals to operate the switching conversion of a higher voltage applied to said output node (25) in a lower voltage rectified at the second winding (13) of the transformer.

8. Apparatus according to one or more of the previous claims 4 to 7, **characterized in that** operates the conversion between two electric networks, at a higher voltage and lower voltage, of an auto vehicle, in particular electric networks of a hybrid vehicle with thermal and electric propulsion.

## Patentansprüche

1. Verfahren zur isolierten Gleichstrom-Gleichstrom-Aufwärtsschaltumwandlung, umfassend:
- Ausführen der Umwandlung mittels eines Transformators (11) mit
einer ersten Wicklung (12) und einer zweiten Wicklung (13), die eine geringere Anzahl von Windungen aufweist als die erste Wicklung (12), und einer Mittelanzapfung (13c) in der zweiten Wicklung (13), wodurch diese zwischen der Mittelanzapfung und einer ersten und zweiten äußeren Klemme in eine erste und zweite Halbwicklung (13a, 13b) unterteilt wird;
- Anlegen einer umzuwandelnden (V1) kontinuierlichen Eingangsspannung an einen Knoten (17) und von dort über eine Blind-Energiespeicherschaltung (15), insbesondere einen Induktor, an die Mittelanzapfung (13c) der zweiten Wicklung (13) ;
- Ausführen eines Schaltvorgangs mittels eines ersten und eines zweiten Hauptschalters (M3, M4), um die erste oder die zweite äußere Klemme der ersten und zweiten Halbwicklung (13a, 13b) selektiv mit einer Festspannungsreferenz (16) zu verbinden;
- Ausführen einer Begrenzung (P1, P2) eines Einschaltstromstoßes in der Blindschaltung (15) beim Einschalten,
wobei die Begrenzung eines Einschaltstromstoßes (P1, P2) in der reaktiven Schaltung (15) während der Einschaltphase das selektive Verbinden jeder der ersten oder zweiten äußeren Klemme der ersten und zweiten Halbwicklung (13a, 13b) mit dem Knoten (17) mittels eines entsprechenden ersten oder zweiten Schaltungszweiges (P1, P2) umfasst, wobei die Zweige jeweils mindestens eine Reihendiode (56, 57) umfassen, die Strom zu dem Knoten (17) leitet, sowie einen zusätzlichen gesteuerten Transistorschalter (M1, M2), der durch ein zusätzliches Ansteuersignal (Vc, Vd) gesteuert wird;
- Ansteuern der Schalter im Rahmen eines Einschaltmodus entsprechend den folgenden Phasen:
- in einer ersten Phase (F1), Schließen des ersten Hauptschalters (M4) und des ersten Zusatzschalters (M2), wobei die Schalter geschlossen bleiben, bis ein Strom (IL) in der Blindspeicherschaltung (15) einen Strombegrenzungswert (Ip) erreicht, der insbesondere gemessen oder geschätzt wird, wobei der zweite Hauptschalter (M3) und der zweite Zusatzschalter (M1) geöffnet bleiben;
- in einer zweiten Phase (F2), Öffnen des ersten Hauptschalters (M4), wobei der erste Zusatzschalter (M2) geschlossen bleibt, so dass zu dem Eingangsknoten (17) ein Strom fließen kann;
- in einer dritten Phase (F3), Schließen des zweiten Hauptschalters (M3) und des zweiten Zusatzschalters (M1), wobei die Schalter geschlossen bleiben, bis der Strom (IL) in der Blindspeicherschaltung (15) den Strombegrenzungswert (Ip) erreicht oder für den Zeitraum, der zur Erreichung des Strombegrenzungswertes (Ip) nötig ist, wobei der erste Hauptschalter (M4) und der erste Zusatzschalter (M2) geöffnet bleiben;
- in einer vierten Phase (F4), Öffnen des zweiten Hauptschalters (M3), wobei der zweite Zusatzschalter (M1) geschlossen bleibt, so dass zu dem Eingangsknoten (17) ein Strom fließen kann;
**dadurch gekennzeichnet, dass**, wenn in einem normalen Ansteuermodus eine Sättigungsbedingung des Transformators (11) erkannt wird, der erste Hauptschalter (M4) und der zweite Hauptschalter (M3) geöffnet werden oder geöffnet bleiben und beide Zusatzschalter (M2, M1) geschlossen werden oder geschlossen bleiben, so dass sich die Blindschaltung (15) über beide Schaltungszweige (P1, P2) entladen kann, bis ein Stromsicherheitswert erreicht ist.

2. Verfahren nach Anspruch 1, **dadurch gekennzeichnet, dass** eine bidirektionale Umwandlung ausgeführt wird, wobei als Dioden (21, 22, 23, 24) einer Gleichrichterschaltung (20), die mit der ersten Wicklung (12) verbunden ist und an einen Ausgangsknoten (25) Ausgangsspannung liefert, Dioden eines Transistors, insbesondere Body-Dioden, verwendet werden, wobei die Transistoren durch entsprechende Steuersignale gesteuert werden, um die Schaltumwandlung einer an den Ausgangsknoten (25) angelegten höheren Spannung in eine an der zweiten Wicklung (13) des Transformators gleichgerichtete niedrigere Spannung zu bewirken.

3. Verfahren nach einem oder mehreren der vorstehenden Ansprüche, **dadurch gekennzeichnet, dass** die Umwandlung zwischen zwei elektrischen Netzen mit einer höheren Spannung und einer niedrigeren Spannung eines Kraftfahrzeugs ausgeführt wird, insbesondere elektrischen Netzen eines Hybridfahrzeugs mit Wärme- und Elektroantrieb.

4. Isolierter Gleichstrom-Gleichstrom Aufwärtsschaltwandler, umfassend einen Transformator (11), der wiederum eine erste Wicklung (12) und eine zweite Wicklung (13) umfasst, die eine geringere Anzahl von Windungen aufweist als die erste Wicklung (12), und eine Mittelanzapfung (13c) in der zweiten Wicklung (13), wodurch diese zwischen der Mittelanzapfung und einer ersten und zweiten äußeren Klemme in eine erste und zweite Halbwicklung (13a, 13b) unterteilt wird, eine Blind-Energiespeicherschaltung (15), insbesondere einen Induktor, der zwischen der Mittelanzapfung (13c) und einem Knoten (17) in Reihe geschaltet ist, der dazu dient, eine umzuwandelnde (V1) kontinuierliche Eingangsspannung, insbesondere eine Batteriespannung, zu empfangen, ein Schaltnetz mit einem ersten und einem zweiten Hauptschalter (M4, M3) zur selektiven Verbindung der ersten oder der zweiten äußeren Klemme der ersten oder zweiten Halbwicklung (13a, 13b) mit einer Festspannungsreferenz (16), insbesondere einem Massebezug, entsprechend der Steuerung der jeweiligen Schaltsteuersignale (Va, Vb), eine Schaltung (P1, P2), die dazu dient, im Betrieb einen Einschaltstromstoß in der Blindschaltung (15) zu begrenzen, wobei die Schaltung (P1, P2) dazu dient, einen Einschaltstromstoß in der Blindschaltung (15) mit einem ersten Schaltungszweig (P1) und einem zweiten Schaltungszweig (P2) zu begrenzen, die jeweils geeignet sind, eine entsprechende äußere Klemme einer ersten Halbwicklung (13a) oder einer zweiten Halbwicklung (13b) der zweiten Wicklung (13) des Transformators mit dem Knoten (17) elektrisch zu verbinden, an den eine umzuwandelnde kontinuierliche Eingangsspannung (V1) angelegt wird, wobei der erste und der zweite Schaltungszweig (P1, P2) jeweils mindestens eine Reihendiode (56, 57) umfassen, die Strom zu dem Knoten (17) leitet, sowie einen zusätzlichen gesteuerten Transistorschalter (M1, M2), der durch ein zusätzliches Ansteuersignal (Vc, Vd) gesteuert wird, **dadurch gekennzeichnet, dass** der Wandler dazu dient, das Verfahren nach Anspruch 1 auszuführen.

5. Vorrichtung nach Anspruch 4, **dadurch gekennzeichnet, dass** die Hauptschalter (M4, M3) Transistoren, insbesondere MOSFETs, sind.

6. Vorrichtung nach einem oder mehreren der vorstehenden Ansprüche 4 bis 5, **dadurch gekennzeichnet, dass** die Vorrichtung zudem eine Diodengleichrichterschaltung (20), einen Ausgangsknoten (25) und einen Ausgangskondensator (26) umfasst, wobei die Diodengleichrichterschaltung dazu dient, die erste Wicklung (12) des Transformators (11) mit dem Ausgangsknoten (25) zu verbinden, an dem eine umgewandelte Spannung (V3) abgenommen wird und mit dem der Ausgangskondensator (26) verbunden ist.

7. Vorrichtung nach Anspruch 6, **dadurch gekennzeichnet, dass** eine bidirektionale Umwandlung ausgeführt wird, wobei die Dioden (21, 22, 23, 24) der Gleichrichterschaltung (20) Transistordioden sind, insbesondere Body-Dioden, die durch entsprechende Steuersignale gesteuert werden können, um die Schaltumwandlung einer an den Ausgangsknoten (25) angelegten höheren Spannung in eine an der zweiten Wicklung (13) des Transformators gleichgerichtete niedrigere Spannung zu bewirken.

8. Vorrichtung nach einem oder mehreren der vorstehenden Ansprüche 4 bis 7, **dadurch gekennzeichnet, dass** die Umwandlung zwischen zwei elektrischen Netzen mit einer höheren Spannung und einer niedrigeren Spannung eines Kraftfahrzeugs ausgeführt wird, insbesondere elektrischen Netzen eines Hybridfahrzeugs mit Wärme- und Elektroantrieb.

## Revendications

1. Procédé de conversion de commutation isolée élévatrice DC-DC, comprenant les étapes suivantes :
- opérer la conversion via un transformateur (11) comprenant un premier enroulement (12) et un second enroulement (13) pourvu d'un nombre de spires plus faible que le premier enroulement (12) et une prise centrale (13c) dans le second enroulement (13) le séparant en premier et second demi-enroulements (13a, 13b) entre la prise centrale et des première et seconde bornes extérieures,
- appliquer une tension d'entrée continue à convertir (V1) à un noeud (17) et de là, à ladite prise centrale (13c) dudit second enroulement (13) via un circuit réactif à stockage d'énergie (15), en particulier un inducteur,
- réaliser une commutation via des premier et second commutateurs principaux (M3, M4) pour connecter de manière sélective lesdites première ou seconde bornes extérieures desdits premier ou second demi-enroulements (13a, 13b) à une référence de tension fixe (16),
- opérer une limitation (P1, P2) d'un courant d'appel dans ledit circuit réactif (15) à la mise sous tension,
ladite opération de limitation d'un courant d'appel (P1, P2) dans ledit circuit réactif (15) comprenant l'étape consistant à connecter de manière sélective durant ladite phase de mise sous tension chacune desdites première ou seconde bornes extérieures desdits premier ou second demi-enroulements (13a, 13b) audit noeud (17) au moyen d'une première ou d'une seconde branche de circuit (P1, P2) respective, lesdites branches comprenant chacune au moins une diode en série (56, 57) qui conduit le courant vers ledit noeud (17) et un commutateur de transistor commandé additionnel (M2, M1), commandé par un signal d'attaque (Vc, Vd) additionnel qui commande, dans le contexte d'un mode de mise sous tension, lesdits commutateurs selon les phases suivantes :
- lors d'une première phase (F1), fermer ledit premier commutateur principal (M4) et ledit premier commutateur additionnel (M2), les maintenir fermés jusqu'à ce qu'un courant (IL) dans le circuit de stockage réactif (15) atteigne une valeur limite de courant (Ip) qui est notamment mesurée ou estimée, maintenir ouvert ledit second commutateur principal (M3) et ledit second commutateur additionnel (M1) ;
- lors d'une seconde phase (F2), ouvrir ledit premier commutateur principal (M4), maintenir fermé ledit premier commutateur additionnel (M2) afin de permettre un flux de courant vers le noeud d'entrée (17) ;
- lors d'une troisième phase (F3), fermer ledit second commutateur principal (M3) et ledit second commutateur additionnel (M1), les maintenir fermés jusqu'à ce que le courant (IL) dans le circuit de stockage réactif (15) atteigne la valeur limite de courant (Ip) ou, pendant le temps permettant d'atteindre ladite valeur limite de courant (Ip), maintenir ouvert ledit premier commutateur principal (M4) et ledit premier commutateur additionnel (M2) ;
- lors d'une quatrième phase (F4), ouvrir ledit second commutateur principal (M3), maintenir fermé ledit second commutateur additionnel (M1) afin de permettre un flux de courant vers le noeud d'entrée (17) ;
**caractérisé en ce que**, lorsque, durant un mode d'attaque normal, un état de saturation du transformateur (11) est détecté, l'on ouvre ou l'on maintient ouvert le premier commutateur principal (M4) et le second commutateur principal (M3) et l'on ferme ou l'on maintient fermé les deux commutateurs additionnels (M2, M1) afin de permettre la décharge du circuit réactif (15) à travers les branches de circuit (P1, P2) jusqu'à ce qu'une valeur de courant de sécurité soit atteinte.

2. Procédé selon la revendication 1, **caractérisé par** l'étape consistant à opérer une conversion bidirectionnelle en utilisant comme diodes (21, 22, 23, 24) d'un circuit redresseur (20) connecté audit premier enroulement (12) et délivrant une tension de sortie (V3) à un noeud de sortie (25) des diodes de transistors, en particulier des diodes de corps, lesquels transistors sont commandés via des signaux de commande respectifs pour opérer la conversion de commutation d'une tension supérieure appliquée audit noeud de sortie (25) à une tension inférieure redressée au niveau du second enroulement (13) du transformateur.

3. Procédé selon l'une ou plusieurs des revendications précédentes, **caractérisé par** l'étape consistant à opérer la conversion entre deux réseaux électriques, à une tension supérieure et une tension inférieure, d'un véhicule automobile, en particulier les réseaux électriques d'un véhicule hybride à propulsion thermique et électrique.

4. Appareil convertisseur de commutation isolé élévateur DC-DC, comprenant un transformateur (11) comprenant un premier enroulement (12) et un second enroulement (13) pourvu d'un nombre de spires plus faible que le premier enroulement (12) et une prise centrale (13c) dans le second enroulement (13) le séparant en premier et second demi-enroulements (13a, 13b) entre la prise centrale et des première et seconde bornes extérieures, un circuit réactif à stockage d'énergie (15), en particulier un inducteur, relié en série entre ladite prise centrale (13c) et un noeud (17) agencé pour recevoir une tension d'entrée continue à convertir (VI), en particulier une tension de batterie, un réseau de commutation comprenant des premier et second commutateurs principaux (M4, M3) pour connecter de manière sélective lesdites première ou seconde bornes extérieures desdits premier ou second demi-enroulements (13a, 13b) à une référence de tension fixe (16), en particulier une référence de terre, via des signaux d'attaque de commutation (Va, Vb) respectifs, un circuit (P1, P2) agencé pour limiter, en cours d'utilisation, un courant d'appel dans ledit circuit réactif (15), ledit circuit (P1, P2) agencé pour limiter un courant d'appel dans ledit circuit réactif (15) comprenant une première branche de circuit (P1) et une seconde branche de circuit (P2), chacune étant adaptée pour relier électriquement de manière sélective une borne extérieure respective d'un premier demi-enroulement (13a) ou second demi-enroulement (13b) dudit second enroulement (13) du transformateur (11) au noeud (17) auquel est appliquée une tension d'entrée continue (VI) à convertir, lesdites première et seconde branches de circuit (P1, P2) comprenant chacune au moins une diode en série (56, 57) qui conduit le courant vers ledit noeud (17) et un commutateur de transistor commandé (M2, M1) additionnel, commandé par des signaux d'attaque (Vc, Vd) additionnels,
**caractérisé en ce que** ledit convertisseur est configuré pour mettre en oeuvre le procédé selon la revendication 1.

5. Appareil selon la revendication 4, **caractérisé en ce que** lesdits commutateurs principaux (M4, M3) sont des transistors, en particulier des MOSFETs.

6. Appareil selon l'une ou plusieurs des revendications précédentes 4 à 5, **caractérisé en ce qu'**il comprend, en outre, un circuit redresseur à diode (20), un noeud de sortie (25) et un condensateur de sortie (26), ledit circuit redresseur à diode étant agencé pour connecter le premier enroulement (12) du transformateur (11) audit noeud de sortie (25) sur lequel est relevée une tension convertie (V3) et auquel est connecté ledit condensateur de sortie (26).

7. Appareil selon la revendication 6, **caractérisé en ce qu'**il est configuré pour opérer une conversion bidirectionnelle, lesdites diodes (21, 22, 23, 24) du circuit redresseur (20) étant des diodes de transistors, en particulier des diodes de corps, pouvant être commandées via des signaux de commande respectifs pour opérer la conversion de commutation d'une tension supérieure appliquée audit noeud de sortie (25) à une tension inférieure redressée au niveau du second enroulement (13) du transformateur.

8. Appareil selon l'une ou plusieurs des revendications précédentes 4 à 7, **caractérisé en ce qu'**il opère la conversion entre deux réseaux électriques, à une tension supérieure et une tension inférieure, d'un véhicule automobile, en particulier les réseaux électriques d'un véhicule hybride à propulsion thermique et électrique.
